# EUROPÄISCHE PATENTSCHRIFT

(11) **EP 1 931 580 B1**
(45) Veröffentlichungstag und Bekanntmachung des Hinweises auf die Patenterteilung: **21.09.2011**
(21) Anmeldenummer: 06805889.0
(22) Anmeldetag: 27.09.2006
(51) Int. Cl.: B65G 13/10, B65G 29/00, B65G 47/71, B61B 13/12, B61J 1/10, B62D 65/18

(54) **ROLLENBAHNFÖRDERER**
ROLLER CONVEYOR
TRANSPORTEURS A GALETS

(30) Priorität: 04.10.2005 DE 102005047530
(43) Veröffentlichungstag der Anmeldung: 18.06.2008
(73) Patentinhaber: Eisenmann AG, 71032 Böblingen (DE)
(72) Erfinder: KOBS, Steffen, 71139 Ehningen (DE); SWOBDOA, Werner, 71032 Böblingen (DE)
(74) Vertreter: Schwanhäusser, Gernot
(86) Internationale Anmeldenummer: PCT/EP2006/009366
(87) Internationale Veröffentlichungsnummer: WO 2007/039196

(56) Entgegenhaltungen:
- EP-A- 1 473 258
- EP-A- 1 475 321
- EP-A- 1 510 477
- DE-A1- 2 200 388
- DE-C1- 4 033 699
- US-A1- 2004 251 112

## Beschreibung

Die Erfindung betrifft einen Rollenbahnförderer zum Transportieren von Warenträgern, insbesondere von "Skids" in der Automobilindustrie, mit einer Förderstrecke, die aus mehreren hintereinander angeordneten Rollenbahnmodulen gebildet ist, wobei die Rollenbahnmodule jeweils zwei zueinander parallele Rollenleisten aufweisen, in denen mindestens eine angetriebene Transportrolle angeordnet ist, und mit einer Funktionseinheit, die relativ zu der Förderstrecke bewegbar ist.

Derartige Rollenbahnförderer sind allgemein im Stand der Technik bekannt und werden zum Transport von Warenträgern wie z.B. Paletten eingesetzt. In der Automobilindustrie werden damit häufig Fahrzeugkarosserien oder Teile von Fahrzeugkarosserien zwischen einzelnen Bearbeitungsstationen transportiert. Die Fahrzeugkarosserien sind dabei auf sogenannten "Skids" befestigt. Damit werden Transportgestelle bezeichnet, die zwei zueinander parallele Skidkufen haben. Die Skidkufen liegen während des Fördervorgangs auf Rollen des Rollenbahnförderers auf, die paarweise und in Förderrichtung hintereinander angeordnet sind. Werden die Rollen durch Antriebe in Drehung versetzt, wird der Skid mit der daran befestigten Fahrzeugkarosserie in Förderrichtung gefördert.

Die bekannten Rollenbahnförderer sind aus einzelnen Rollenbahnmodulen zusammengesetzt, die jeweils einen einzigen elektrischen Antriebsmotor enthalten. Der Antriebsmotor ist in der Regel zwischen parallelen Rollenleisten angeordnet, in denen die Rollen aufgenommen sind. Meist wird das vom Antriebsmotor erzeugte Drehmoment über Riemen auf die angetriebenen Rollen einer der beiden Rollenleisten verteilt. Diese Rollen sind über Achsen starr mit den Rollen auf der anderen Rollenleiste verbunden.

Häufig weisen derartige Rollenbahnförderer Funktionseinheiten auf, die relativ zu der Förderstrecke bewegbar sind. Meist handelt es sich dabei um Längs- oder Querverschiebewagen oder um Dreh- oder Schwenktische. Mit derartigen Funktionseinheiten ist es z.B. möglich, mehrere Förderstrecken netzartig miteinander zu verknüpfen oder Warenträger wie bei einem Rangierbahnhof auf Abstellstrecken zu verteilen.

Bei den Funktionseinheiten handelt es sich bislang um eigenständig konstruierte Einrichtungen, die neben angetriebenen und ggf. auch nicht angetriebenen Transportrollen ein Fahrwerk aufweisen, um die Funktionseinheit relativ zu der Förderstrecke bewegen zu können.

Aus der EP-A1-1 473 258 ist ein Drehtisch für einen Rollenbahnförderer bekannt, der eine Rollenbahn aufweist, die um einen durch die Mitte der Rollenbahn verlaufende Drehachse drehbar ist und sich dabei auf einer kreisförmigen Fahrschiene abstützt. Die Rollenbahn weist in unmittelbarer Nähe ihrer Stirnseiten Rollen auf.

Ein ähnlicher Drehtisch ist auch aus der EP-A1-1 475 321 bekannt, wobei statt nur einer zwei sich kreuzende Rollenbahnen gemeinsam um die Drehachse verdrehbar sind.

Die DE-U1-202 12 887 offenbart einen Rollenbahnförderer mit Rollenbahnmodulen, aus denen gerade Förderabschnitte aufgebaut werden können. In unmittelbarer Nähe der Stirnseiten der Rollenbahnmodule sind Rollen angeordnet.

Aufgabe der Erfindung ist es, die Variabilität und Modularität der bekannten modularen Rollenbahnsysteme zu verbessern.

Diese Aufgabe wird durch Rollenbahnsystem mit den Merkmalen des Anspruchs 1 gelöst

Erfindungsgemäß wird die Funktionseinheit somit nicht mehr als relativ komplexe Gesamteinheit konstruiert, sondern auf der Basis eines für die Förderstrecken verwendeten Rollenbahnmoduls aufgebaut. Durch Befestigen der Fahrwerksmodule an den standardisierten Rollenbahnmodulen können somit auf einfache Weise komplexere Funktionseinheiten wie Dreh- oder Schwenktische sowie Längs- und Querverschiebewagen aufgebaut werden. Dies vereinfacht die Konstruktion, die Bevorratung von Einzelteilen und auch die Montage des Rollenbahnförderers erheblich. Die Aufrüstung eines normalen Rollenbahnmoduls in eine komplexere Funktionseinheit ist sogar am Betriebsort des Rollenbahnförderers möglich.

Um die Bewegbarkeit der Funktionseinheit zu ermöglichen, weisen die Fahrwerksmodule Einrichtungen auf, die eine Relativbewegung zu den ortsfesten Förderstrecken ermöglichen.

Besonders einfach und kostengünstig ist es, dass die Fahrwerksmodule Laufrollen aufweisen, auf denen die gesamte Funktionseinheit auf einem geeigneten Untergrund oder auf Schienen bewegt werden kann. Die Anordnung und Ausrichtung der Laufrollen an den Fahrwerksmodulen bestimmt dann, wie sich die gesamte Funktionseinheit bewegen kann.

Haben die Laufrollen der Fahrwerksmodule z.B. Drehachsen, die parallel zur Längsrichtung der Rollenleisten verlaufen, so handelt es sich bei der Funktionseinheit um einen Querverschiebewagen, der quer zur Längsrichtung der Rollenleisten verfahrbar ist.

Haben die Laufrollen der Fahrwerksmodule hingegen Drehachsen, die im rechten Winkel zu der Längsrichtung der Rollenleisten und parallel zu einer durch die Rollenleisten vorgegebenen Förderebene verlaufen, so wird aus dem Rollenbahnmodul ein Längsverschiebewagen, der entlang der Längsrichtung der Rollenleisten verfahrbar ist.

Im Prinzip lassen sich mit längs oder quer zur Längsrichtung der Rollenleisten angeordneten Drehachsen der Lauf· rollen auch Dreh- oder Schwenktische aufbauen. Eine bessere Abstützung und günstigere Laufeigenschaften werden aber erzielt, wenn die Laufrollen der an den Rollenbahnmodulen befestigten Fahrwerksmodule Drehachsen haben, die parallel zu einer durch die Rollenleisten vorgegebenen Förderebene und schräg zu der Längsrichtung der Rollenleisten verlaufen. Das Rollenbahnsystem kann dann ferner als weitere Module gekrümmte Laufschienen für die Laufrollen umfassen. Der Radius der Laufschienen kann dabei relativ groß sein, wodurch eine gute Abstützung des Dreh-oder Schwenktisches gewährleistet wird.

Wenn die Fahrwerksmodule lösbar mit dem Rollenbahnmodul verbunden sind, so besteht die Möglichkeit, durch nachträglichen Austausch der Fahrwerksmodule Funktionseinheiten in andere Funktionseinheiten umzuwandeln. Dadurch kann der Rollenbahnförderer auf einfache Weise am Betriebsort umgebaut werden, um veränderten Anforderungen Rechnung zu tragen. Bereits vorhandene Rollenbahnmodule und ggf. auch Fahrwerksmodule können auch bei einem solchen Umbau unter Umständen weiter verwendet werden.

Am günstigsten ist es, wenn bei der Funktionseinheit die Fahrwerksmodule derart an dem Rollenbahnmodul befestigt sind, daß sie von dessen Stirnseiten gleiche Abstände haben. Auf diese Weise wird eine symmetrische Anordnung erzielt, die eine gleichmäßige Kräfteverteilung gewährleistet. Beim Aufbau von Drehtischen ist eine solche symmetrische Anordnung sogar zwingend. Vorteilhaft ist eine solche symmetrische Anordnung auch im Hinblick auf zusätzliche Teile wie Abdeckungen o.ä., die dann ebenfalls in standardisierten Größen bereitgestellt werden können.

Im Sinne einer möglichst günstigen Kräfteverteilung sollten bei der Funktionseinheit die Fahrwerksmodule derart an dem Rollenbahnmodul befestigt sein, daß sie sich parallel zu einer durch die Rollenleisten festgelegten Ebene vom Rollenbahnmodul aus nach außen erstrecken.

Konstruktiv am einfachsten ist es, wenn bei der Funktionseinheit die Fahrwerksmodule an Seitenwangen der Rollenleisten befestigt sind. Alternativ hierzu können die Fahrwerksmodule aber auch unterhalb der Rollenleisten befestigt werden.

Um die Montage der Funktionseinheit am Betriebsort zu vereinfachen, können an den Rollenbahnmodulen Anschläge zum Ausrichten der Fahrwerksmodule oder damit verbundener Zwischenträger ausgebildet sein.

Falls die Rollenleisten in Querrichtung durch Quertraversen miteinander verbunden sind, so besteht die Möglichkeit, bei der Funktionseinheit die Fahrwerksmodule an den Enden der Quertraversen zu befestigen.

Noch günstiger ist es, wenn die Rollenleisten Durchbrüche haben, die quer zur Längsrichtung der Rollenleisten verlaufen. In die Durchbrüche können Querträgern eingeführt sein, die mit den Fahrwerksmodulen verbunden sind.

Ist eine Quertraverse zwischen den Rollenleisten vorhanden, kann diese vorteilhaft derart zwischen sich einander gegenüberliegenden Durchbrüchen der Rollenleisten angeordnet sein, daß sie als Anschlag für einen solchen Querträger dient. Die Quertraversen selbst sind vorzugsweise lösbar mit den Rollenleisten verbunden. Dies ist deswegen vorteilhaft, weil die Rollenbahnmodule dann selbst wieder aus kleineren Baugruppen, nämlich den Rollenleisten und den Quertraversen, am Betriebsort des Rollenbahnförderers zusammengebaut werden können. Somit lassen sich auch Rollenbahnmodule montieren, die sich wegen ihres Transportvolumens nur mit größeren Schwierigkeiten zum Betriebsort transportieren lassen würden.

Eine besonders gute Anschlagswirkung wird erzielt, wenn die Quertraversen ein Hohl- oder U-Profil haben, in das der Querträger eingeführt ist.

Bei einer besonders vorteilhaften Ausgestaltung der Erfindung sind bei der Funktionseinheit jeweils zwei Fahrwerksmodule an einem Querträger befestigt, der sich zumindest über die gesamt Breite des Rollenbahnmoduls hinweg erstreckt und in den Durchbrüchen der Rollenleisten aufgenommen ist. Der Querträger stellt damit einen Zwischenträger dar, an dem die Fahrwerksmodule befestigt werden können.

Zwei Fahrwerksmodule auf gleicher Höhe können bei dieser Ausgestaltung sehr einfach in der Weise an dem Rollenbahnmodul befestigt werden, indem zuerst der Querträger durch die Durchbrüche hindurchgeführt wird. Der Querträger liegt dann vorzugsweise an geeignet ausgebildeten Anschlagflächen an den Rollenleisten an und kann in dieser Position durch Verschraubung oder auf sonstige Weise an den beiden Rollenleisten befestigt werden. Anschließend werden die zwei Fahrwerksmodule an dem eingeführten Querträger, und zwar vorzugsweise an dessen freien Enden, befestigt. Auf diese Weise wird eine sehr stabile und schnell montierbare Befestigung der Fahrwerksmodule an einem Rollenbahnmodul erreicht.

Die Querträger und/oder die Rollenleisten können bei dieser Ausgestaltung vorzugsweise als U-Profile ausgebildet sein. Dadurch erhält die gesamt Funktionseinheit einen sehr verwindungssteifen und dennoch leichten Aufbau.

U-Profile haben ferner den Vorteil, daß das Innere der Profile besser zugänglich ist, um Verschraubungen u.ä. anzubringen oder elektrische Leitungen zu verlegen. Unter dem letztgenannten Gesichtspunkt ist es weiter vorteilhaft, wenn die U-Profile der Rollenleisten so angeordnet sind, daß ihre offene Seite nach oben weist. Diese offene Seite kann bei Bedarf mit Abdeckungen geschlossen werden, nachdem alle Montagearbeiten erledigt sind, die einen Zugang zum Inneren der Profile erfordern.

Auf den Rollenleisten können jedoch auch Abdeckungen befestigt sein, die den gesamten Raum zwischen den Rollen leisten überdecken und die vorzugsweise alle die gleichen Abmessungen haben.

Die Abdeckungen können in Längsrichtung der Rollenleisten Abmessungen haben, die dem Abstand zwischen den Transportrollen im wesentlichen entspricht. Damit die gleichen Abdeckungen auch an den Übergängen zwischen den benachbarten Rollenbahnmodulen verwendet werden können, sollte der Abstand zwischen den Transportrollen doppelt so groß sein wie der Abstand zwischen den Stirnseiten der Rollenbahnmodule und den stirnseitig letzten Transportrollen.

Der modulare Aufbau des Rollenbahnförderers kommt besonders vorteilhaft zum Tragen, weil der Rollenbahnförderer erfindungsgemäss mehrere unterschiedliche Funktionseinheiten aufweist, die auf der Basis des gleichen Rollenbahnmoduls aufgebaut sind und sich voneinander im wesentlichen nur durch die daran befestigten Fährwerksmodule unterscheiden. Da, wie eingangs erwähnt, die Beweglichkeit der Funktionseinheiten letztlich nur durch die Anordnung der Laufrollen relativ zu den Rollenleisten festgelegt wird, genügt es vom Grundsatz her, die Fahrwerksmodule als einfache Halterungen auszubilden, in denen Laufrollen mit unterschiedlicher Orientierung gehalten sind. Diese Halterungen können dann, ggf. über zusätzliche Zwischenträger, mit den Rollenleisten verbunden werden.

Eine weitere Unterscheidung der Fahrwerksmodule kann unter dem Gesichtspunkt erfolgen, ob die Laufrollen angetrieben sind oder nicht. Bei der Verwendung von Nabenantrieben können die gleichen Halterungen sowohl für angetriebene als auch für nicht angetriebene Laufrollen verwendet werden. Auf diese Weise wird die Modularität des gesamten Systems weiter erhöht.

Der Aufbau der Rollenleisten vereinfacht sich erheblich, wenn jede angetriebene Transportrolle ihren eigenen Antrieb, z.B. in Form eines Nabenantriebs, hat. Auf die relativ aufwendige und wartungsintensive Verwendung von Riemen zum Übertragen der Antriebsdrehmomente zwischen benachbarten Rollen kann dann verzichtet werden.

Um eine selbstständige Bewegung des Rollenbahnmoduls in der Bewegungsebene zu ermöglichen, sollte mindestens eine Laufrolle einer Funktionseinheit einen eigenen Antrieb haben. Vorzugsweise handelt es sich dabei ebenfalls um einen Nabenantrieb. Ein solcher Nabenantrieb erlaubt es, sowohl für die Laufrollen als auch für die Transportrollen die gleichen, aus einer Rolle und dem Nabenantrieb bestehenden Baugruppen einzusetzen. Dies ermöglicht wiederum einen sehr kompakten und modularen Aufbau der gesamten Funktionseinheit.

Bei Verwendung gleicher Baugruppen für die Transportrollen und für die Laufrollen kann auch die Stromversorgung und Ansteuerung der Rollen in gleicher Weise erfolgen. So können alle Rollen-Baugruppen an die gleiche Stromversorgung und die gleiche Steuerungseinrichtung angeschlossen werden.

Vorzugsweise lassen sich diese Rollen-Baugruppen so miteinander verbinden, daß an den Stirnseiten der Rollenbahnmodule jeweils ein einziger elektrischer Anschluß für die Stromversorgung aller Antriebe und ein einziger Anschluß für eine Steuerung der Antriebe vorhanden sind. Diese Anschlüsse können dann mit den Anschlüssen eines daran angrenzenden Rollenbahnmoduls verbunden werden. Besonders einfach ist die Verbindung, wenn die Anschlüsse als lösbare Verbindungen ausgebildet sind.

Vorteilhaft ist es außerdem, wenn jedes Rollenbahnmodul mindestens zwei angetriebene Transportrollen hat. Wenn die Skids nicht wesentlich kürzer sind als die Rollenbahnmodule, so ist auf diese Weise gewährleistet, daß jeder Skid zu jedem Zeitpunkt auf mindestens zwei angetriebenen Transportrollen aufliegt. Fällt eine der Transportrollen aus, so ist die verbleibende Transportrolle zumindest in der Lage, in einem Notbetrieb den Skid weiter zu fördern.

Weitere Merkmale und Vorteile der Erfindung ergeben sich aus der nachfolgenden Beschreibung eines Ausführungsbeispiels anhand der Zeichnungen. Darin zeigen:
- Figur 1: eine perspektivische Darstellung einer ersten Ausführungsform eines Rollenbahnmoduls;
- Figur 2: eine perspektivische Darstellung eines Querverschiebewagens, der auf der Grundlage des in der Figur 1 gezeigten Rollenbahnmoduls aufgebaut ist;
- Figur 3: eine perspektivische Darstellung eines Längsverschiebewagens, der auf der Grundlage des in der Figur 1 gezeigten Rollenbahnmoduls aufgebaut ist;
- Figur 4: eine perspektivische Darstellung eines Drehtischs, der auf der Grundlage des in der Figur 1 gezeigten Rollenbahnmoduls aufgebaut ist;
- Figur 5: eine perspektivische Darstellung eines Schwenktischs, der auf der Grundlage des in der Figur 1 gezeigten Rollenbahnmoduls aufgebaut ist;
- Figur 6: eine Draufsicht auf eine zweite Ausführungsform eines Rollenbahnmoduls ;
- Figur 7: einen Schnitt durch eine Rollenleiste des in der Figur 6 gezeigten Rollenbahnmoduls entlang der Linie VII-VII;
- Figur 8: einen Schnitt durch eine Quertraverse des in der Figur 6 gezeigten Rollenbahnmoduls entlang der Linie VIII-VIII;
- Figur 9: einen Schnitt durch eine Rollenleiste des in der Figur 6 gezeigten Rollenbahnmoduls entlang der Linie IX-IX.

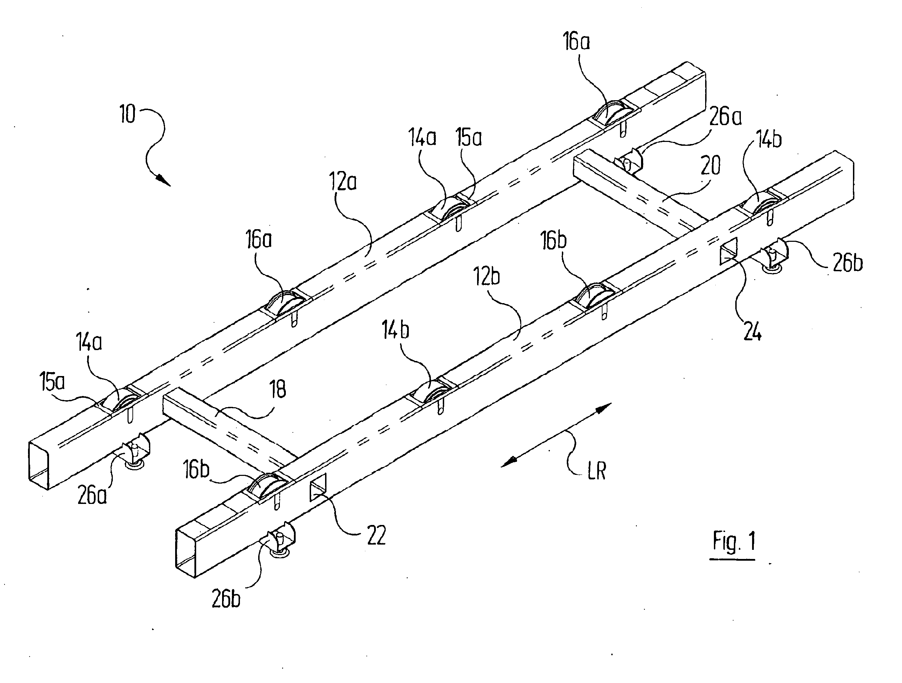

In der Figur 1 ist ein erstes Ausführungsbeispiel eines Rollenbahnmoduls perspektivisch dargestellt und insgesamt mit 10 bezeichnet. Das Rollenbahnmodul 10 weist zwei Rollenleisten 12a, 12b auf, bei denen es sich jeweils um Hohlprofile mit rechteckigem Querschnitt handelt. In der Rollenleiste 12a sind zwei angetriebene Transportrollen 14a und zwei nicht angetriebene Transportrollen 16a abwechselnd entlang einer mit einem Doppelpfeil LR angedeuteten Längsrichtung angeordnet. Jeder der angetriebenen Transportrollen 14a ist ein eigener elektrischer Nabenantrieb zugeordnet, der mit den Transportrollen 14a eine kompakte Baugruppe bildet. Diese Baugruppen werden bei der Montage der Rollenleiste 12a in Aussparungen eingesetzt, die an der Oberseite der Rollenleiste 12a z.B. durch Laserschneiden freigelegt werden. Nach dem Einsetzen dieser Einheiten können zwischen den Transportrollen 14a und der Oberseite der Rollenleiste 12a verbleibende Spalte durch Einsetzen eines rechteckigen Rahmenteils 15a verkleinert werden.

Entsprechendes gilt auch für die nicht angetriebenen Transportrollen 16a, nur daß diese keinen Nabenantrieb haben.

Die Profile der angetriebenen Transportrollen 14a können eine andere Form als die Profile der nicht angetriebenen Transportrollen 16a aufweisen. Insbesondere ist es günstig, wenn die angetriebenen Transportrollen 14a mit einer Beschichtung versehen sind, die eine hohe Reibwirkung erzeugt.

Die Nabenantriebe der angetriebenen Transportrollen 14a sind über eine gemeinsame Spannungsversorgung miteinander verbunden, sind jedoch über einer Steuerbus individuell ansteuerbar. Vorzugsweise verlaufen die Leitungen für die Stromversorgung und den Steuerbus innerhalb der Rollenleiste 12a und münden an den freien Enden der Rollenleiste 12a in geeigneten Steckkontakten (nicht dargestellt), um einen einfachen Anschluß an angrenzende Rollenbahnmodule zu ermöglichen.

Die andere Rollenleiste 12b ist in gleicher Weise ausgeführt, nur daß dort die angetriebenen Transportrollen 14b so versetzt zu den angetriebenen Transportrollen 14a der Rollenleiste 12a angeordnet sind, daß auf einer Höhe in Längsrichtung LR eine angetriebene Transportrolle 14a, 14b jeweils einer nicht angetriebenen Transportrolle 16b bzw. 16a gegenübersteht.

Die vorstehend beschriebene Anordnung der angetriebenen und nicht angetriebenen Transportrollen ist nur beispielhaft. Ganz allgemein hängt diese Anordnung bei Rollenbahnförderern vor allem von der Art und den Abmessungen der zu fördernden Warenträger, dem Gewicht der darauf zu transportierenden Gegenstände und auch von der Antriebsleistung der Rollenantriebe ab. Auch bei den hier im Vordergrund stehenden Skids kommen andere Anordnungen in Betracht. So können die angetriebenen Transportrollen anstelle der versetzten Anordnung auch jeweils parallel, d.h. auf einer Höhe liegend, angeordnet sein. Es können auch mehr oder weniger nicht angetriebene Laufrollen vorhanden sein, als dies vorstehend beschrieben wurde.

Die beiden Rollenleisten 12a, 12b sind über zwei Quertraversen 18, 20 starr miteinander verbunden. Die Quertraversen 18, 20 sind an die Rollenleisten 12a, 12b angeschweißt oder auf andere Weise, z.B. durch Verschraubungen, befestigt. Bei dem in der Figur 1 dargestellten Ausführungsbeispiel sind die Quertraversen 18, 20 ebenfalls als Hohlprofile ausgebildet, die hier einen quadratischen Querschnitt haben. An den vertikalen Seitenwangen der Rollenleisten 12a, 12b sind auf der Höhe der Quertraversen 18, 20 quadratische Aussparungen vorgesehen, die sich durch die Rollenleisten 12a, 12b hindurch erstrecken. Diese Aussparungen fluchten mit dem Innenprofil der Quertraversen 18, 20, so daß sich insgesamt zwei durchgehende Kanäle 22 bzw. 24 ergeben, die sich über die gesamte Breite des Rollenbahnmoduls 10 hinweg erstrecken. Die Kanäle 22, 24 dienen als Aufnahme für Querträger, die von der Seite her in die Kanäle 22, 24 eingeschoben und dann in nicht näher dargestellter Weise, zum Beispiel durch Verschraubung oder Verschweißen, befestigt werden. Die Bedeutung der in die Kanäle 22, 24 einführbaren Querträger wird weiter unten mit Bezug auf die übrigen Figuren erläutert.

Das gesamte Rollenbahnmodul 10 ist in dem dargestellten Ausführungsbeispiel auf Bodenträgern 26a, 26b befestigt, welche die Rollenleisten 12a, 12b von unten her umgreifen. Die Bodenträger 26a, 26b werden auf einem Montageboden oder einer ähnlichen Tragstruktur befestigt und können zum Ausgleich von Bodenunebenheiten in der Höhe justierbar sein.

Zum Aufbau eines Rollenbahnförderers werden mehrere Rollenbahnmodule 10 hintereinander angeordnet. Dann werden die elektrischen Verbindungen an den Enden der Rollenleisten 12a, 12b mit den entsprechenden Verbindungen der benachbarten Rollenleisten 12a, 12b verbunden. Anschließend werden die Rollenleisten 12a, 12b der stirnseitig angrenzenden Rollenbahnmodule miteinander verbunden, wofür beispielsweise in die Hohlprofile einsetzbare Führungsschuhe verwendet werden können. In einem weiteren Schritt werden die Bodenträger 26a, 26b nach der exakten Ausrichtung der Rollenbahnmodule in ihrer endgültigen Lage befestigt und in der Höhe nivelliert. Nach dem Anschluß der Rollenbahnmodule 10 an eine Spannungsversorgung und an eine Steuerungseinheit kann der Förderbetrieb bereits aufgenommen werden. Auf diese Weise läßt sich sehr rasch und mit geringem Montageaufwand am Betriebsort ein Rollenbahnförderer aufbauen, der auf Grund seines modularen Aufbaus vielseitig abwandelbar ist.

Bei den vom Rollenbahnförderer zu fördernden Gegenständen kann es sich insbesondere um Skids handeln, die ihrerseits Kraftfahrzeugkarosserien oder vormontierte Kraftfahrzeuge tragen. Die Skids sind an ihrer Unterseite mit Kufen versehen, mit denen sie auf den angetriebenen und nicht angetriebenen Transportrollen 14a, 14b bzw. 16a, 16b aufliegen. Die Kufen der Skids sind dabei so lange, daß sie stets auf mindestens zwei Transportrollen, vorzugsweise auf drei oder sogar auf vier Transportrollen, aufliegen. Durch die wechselseitige Anordnung der angetriebenen und nicht angetriebenen Transportrollen 14a, 14b bzw. 16a, 16b ist gewährleistet, daß bei dieser Auslegung jede Kufe des Skids stets von mindestens einer Transportrolle angetrieben wird. Es hat sich als günstig erwiesen, wenn die Rollenbahnmodule 10 eine Gesamtlänge haben, die etwas größer ist als die Länge derartiger Skids. Bei einer Skidlänge von 5 Metern kann das Rollenbahnmodul 10 beispielsweise eine Länge von 6 Metern haben.

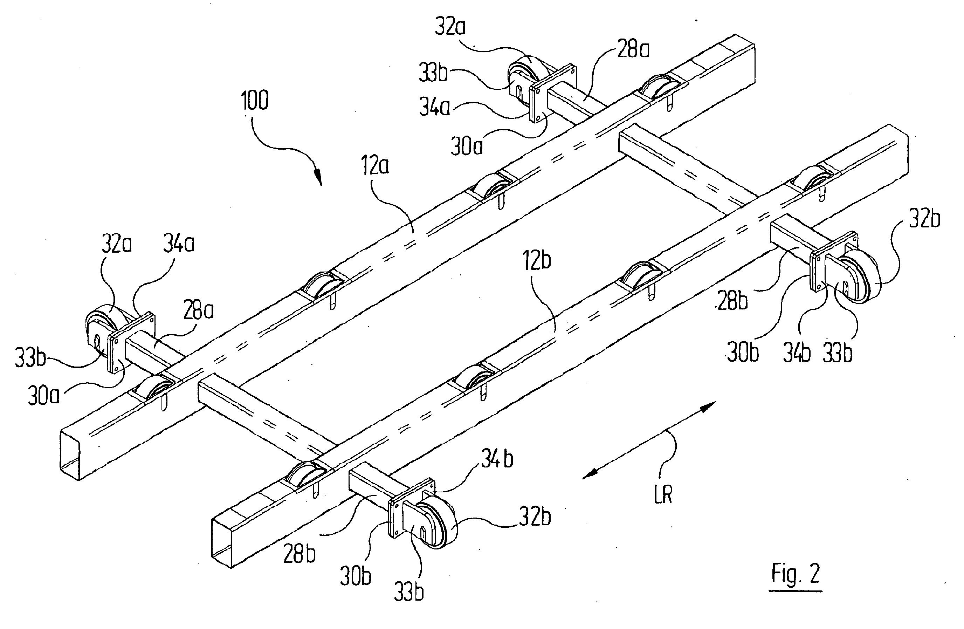

Wie bereits erwähnt wurde, dienen die auf der Höhe der Quertraversen 18, 20 verlaufenden Kanäle 22, 24 der Aufnahme von Querträgern, mit denen die Rollenbahnmodule 10 weiter ausgebaut und in unterschiedliche Funktionseinheiten umgewandelt werden können. Im folgenden werden unterschiedliche Möglichkeiten mit Bezug auf die Figuren 2 bis 5 erläutert, welche Funktionseinheiten sich auf der Grundlage der Rollenbahnmodule 10 aufbauen lassen.

In der Figur 2 ist ein auf der Grundlage des Rollenbahnmoduls 10 aufgebauter Querverschiebewagen 100 in einer an die Figur 1 angelehnten perspektivischen Darstellung gezeigt. Zum Aufbau des Querverschiebewagens 100 sind in die Kanäle 22, 24 zu beiden Seiten der Rollenleiste 12a, 12b Querträger 28a, 28b eingeschoben und in ihrer Einschubposition in nicht näher dargestellter Weise lösbar oder auch unlösbar befestigt. An den gegenüberliegenden Enden tragen die Querträger 28a, 28b Anschlußflansche 30a bzw. 30b. Soll das Rollenbahnmodul 10 zwischen zwei vertikalen Wänden befestigt werden, so können die Anschlußflansche 30a, 30b dazu verwendet werden, eine Verschraubung mit den Wänden herzustellen.

Die Anschlußflanschen 30a, 30b können aber auch zur Befestigung von Laufrollen 32a, 32b verwendet werden, die in Halterungen 33a, 33b gehalten sind. Die Halterungen 33a, 33b für die Laufrollen 32a, 32b weisen Gegenflansche 34a, 34b auf, die mit den Anschlußflanschen 30a, 30b der Querträger 28a, 28b verschraubt sind. Die Laufrollen bilden zusammen mit den Halterungen 33a, 33b Fahrwerksmodule, die als vormontierte Einheiten an die Anschlußflansche 30a, 30b angeschraubt werden können.

Bei dem in der Figur 2 gezeigten Fall verlaufen die Drehachse der Laufrollen 32a, 32b parallel zur Längsrichtung LR. Die beiden Laufrollen 32a auf einer Seite des Rollenbahnmoduls 10 sind jeweils mit eigenen Nabenantrieben versehen. Im einzelnen handelt es sich dabei um die gleichen Baugruppen, die auch für die angetriebenen Transportrollen 14a, 14b verwendet werden.

Die gesamte in der Figur 2 dargestellte Einheit läßt sich somit, angetrieben durch die Nabenantriebe der beiden Laufrollen 32a, quer zur Längsrichtung LR verfahren, wie dies für einen Querverschiebewagen kennzeichnend ist. Mit dem Querverschiebewagen 100 ist es möglich, Skids und andere Warenträger quer zur Förderrichtung zu verfahren und zum Beispiel auf diese Weise zwischen mehreren Förderstrecken umzusetzen.

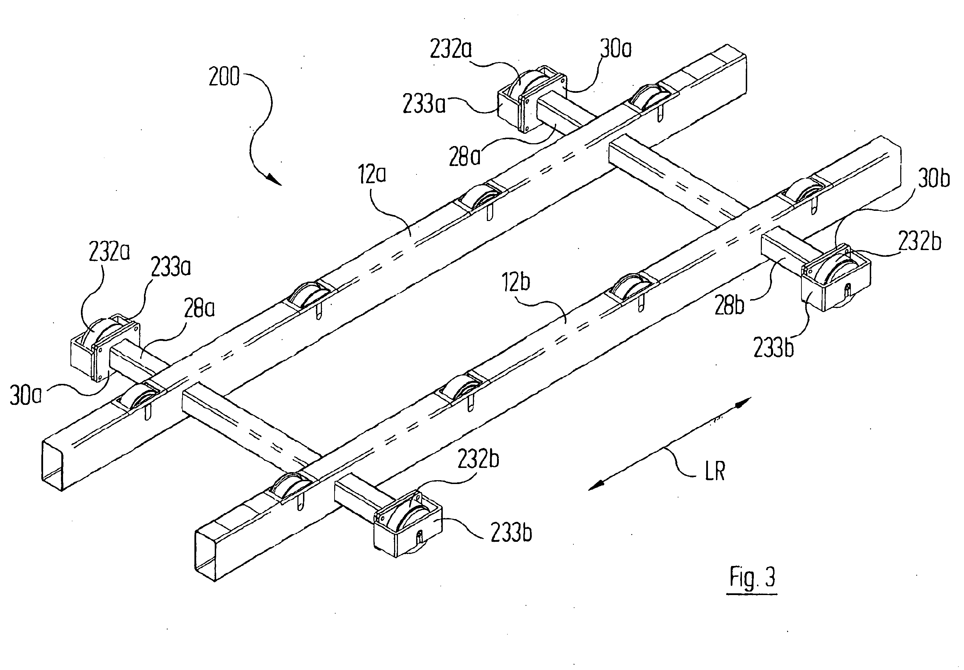

Die Figur 3 zeigt in einer an die Figur 2 angelehnten perspektivischen Darstellung, wie durch Verwendung anders ausgerichteter Laufrollen auf der Basis des Rollenbahnmoduls 10 ein Längsverschiebewagen aufgebaut werden kann, der in der Figur 3 insgesamt mit 200 bezeichnet ist. Zum Aufbau des Längsverschiebewagens 200 werden an die Anschlußflansche 30a, 30b der Querträger 28a, 28b Halterungen 233a, 233b für Laufrollen 232a, 232b befestigt, deren Drehachse parallel zur Längsrichtung der Quertraversen 18, 20 verläuft. Auf diese Weise entsteht ein entlang der Längsrichtung LR verfahrbarer Längsverschiebewagen, mit dem darauf getragene Gegenstände in Längsrichtung LR zusammen mit dem Rollenbahnmodul 10 verfahren werden können.

Auch hier können wieder zwei oder auch mehrere der Laufrollen 30a, 30b über einen eigenen Antrieb verfügen, wie dies auch bei dem in der Figur 2 gezeigten Ausführungsbeispiel für einen Querverschiebewagen der Fall ist.

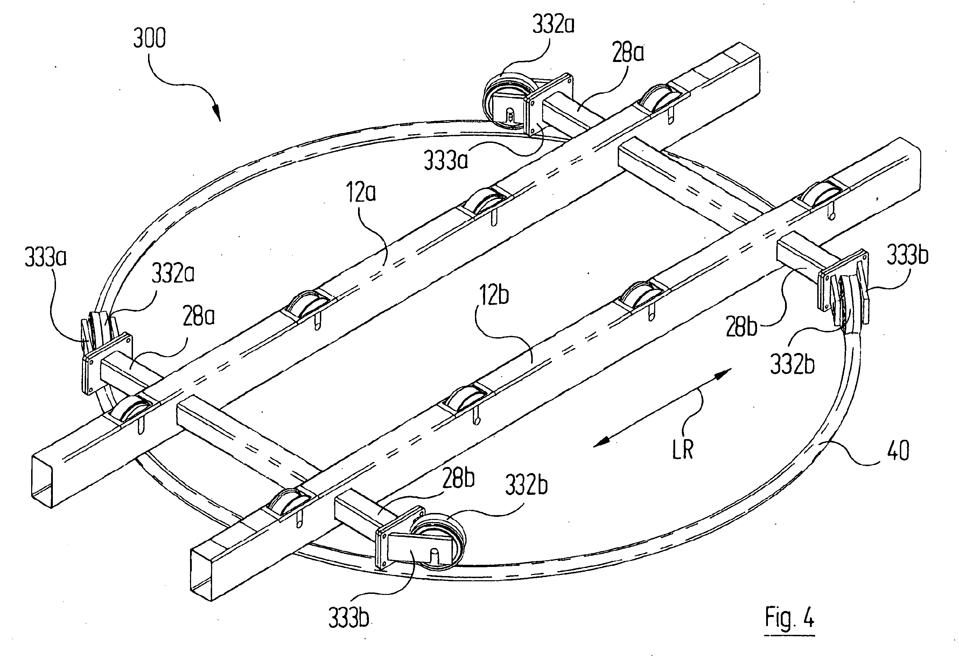

Die Figur 4 zeigt in einer perspektivischen Darstellung einen insgesamt mit 300 bezeichneten Drehtisch, der ebenfalls auf der Grundlage eines Rollenbahnmoduls 10 aufgebaut ist. Bei dem Drehtisch 300 sind an die Anschlußflansche 30a, 30b der Querträger 28a bzw. 28b Halterungen 333a, 333b für Laufrollen 332a, 332b befestigt, deren Drehachse einen Winkel von ±30° zur Längsrichtung LR einnehmen. Die Anordnung der Laufrollen 332a, 332b ist dabei derart gewählt, daß einander diametral gegenüberliegende Laufrollen koaxiale Drehachsen haben. Auf diese Weise liegen die Laufrollen 232a, 232b auf einer Kreisbahn, wodurch eine Verdrehung des Rollenbahnmoduls 10 um eine senkrechte Symmetrieachse möglich ist. Zur Führung der Laufräder 232a, 232b weist der Drehtisch 300 eine kreisförmige Laufschiene 40 auf, auf denen die Laufrollen 232a, 232b geführt abrollen. Auch hier sind vorzugsweise wieder zwei Laufrollen 232a, 232b mit Nabenantrieben versehen.

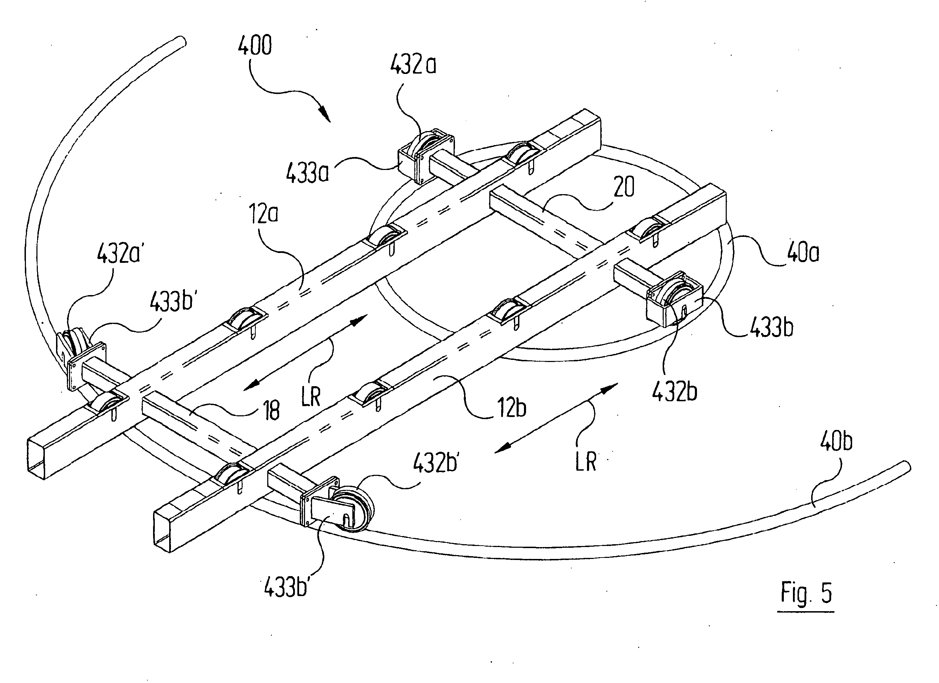

Die Figur 5 zeigt schließlich einen insgesamt mit 400 bezeichneten Schwenktisch in einer perspektivischen Darstellung, der ebenfalls auf der Basis des Rollenbahnmoduls 10 aufgebaut ist. Bei dem Schwenktisch 400 sind an den Anschlußflanschen 30a, 30b der Querträger 28a bzw. 28b Paare von Halterungen 433a, 433b und 433a', 433b' befestigt, bei denen die Laufrollen quer zur Längsrichtung LR bzw. schräg hierzu ausgerichtet sind. An einem Ende des Schwenktischs 400 verlaufen die Drehachsen eines ersten Paares von Laufrollen 432a, 432b quer zur Längsrichtung LR des Querträgers 20. Diese beiden Laufräder 432a, 432b laufen auf einer kreisförmigen Laufschiene 40a ab.

Am gegenüberliegenden Ende des Schwenktischs 400 tragen die Anschlußflansche 30a, 30b Halterungen 433a', 433b' für Laufrollen 432a' bzw. 432b', deren Drehachsen zur Längsrichtung LR der Rollenleiste 12a, 12b hier beispielhaft einen Winkel von ±15° einschließen. Diese beiden äußeren Laufrollen 432a', 432b' laufen auf einer etwa halbkreisförmigen zweiten Laufschiene 40b ab, die konzentrisch zur ersten Laufschiene 40a angeordnet ist.

Auch bei dem Schwenktisch 400 ist ein Paar von einander gegenüberliegenden Laufrädern, zum Beispiel das äußere Paar 432a', 432b', mit eigenen Nabenantrieben versehen, so daß der Schwenktisch um den Mittelpunkt der ersten Laufschiene 40a verschwenkt werden kann.

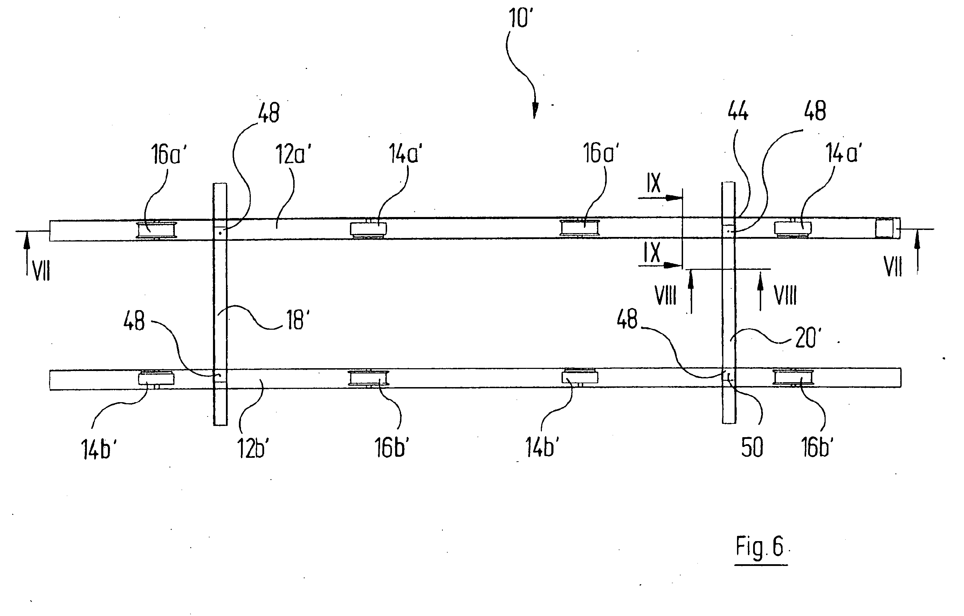

Die Figuren 6 bis 9 zeigen ein insgesamt mit 10' bezeichnetes Rollenbahnmodul gemäß einem zweiten Ausführungsbeispiel in einer Draufsicht bzw. in Schnittdarstellungen entlang der Linien VII-VII, VIII-VIII und IX-IX. Teile, die bezüglich des in der Figur 1 gezeigten Rollenbahnmoduls 10 gleich sind oder einander entsprechen, sind mit Bezugsziffern versehen, die durch einen Apostroph (') ergänzt sind.

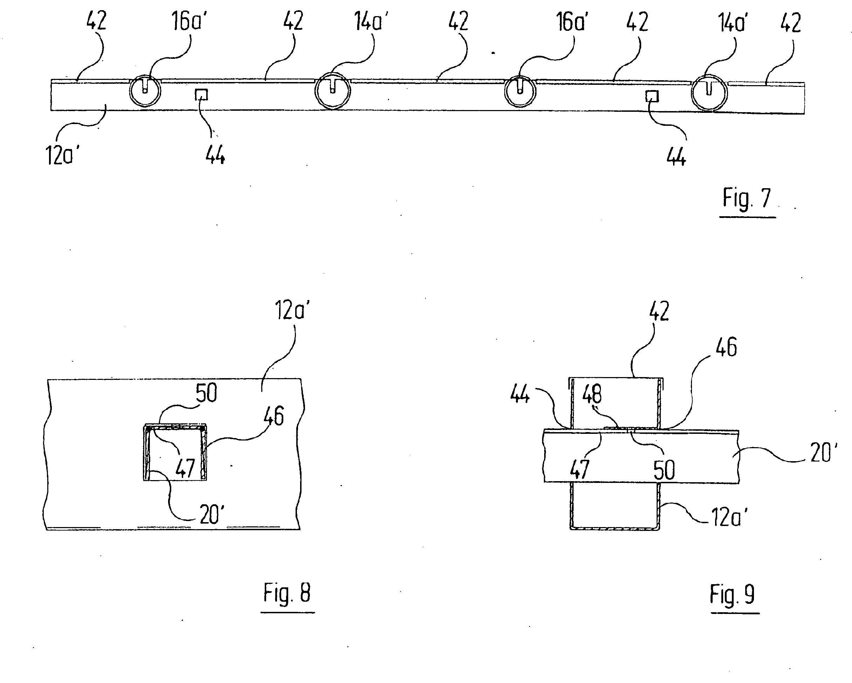

Das Rollenbahnmodul 10' weist zwei Rollenleisten 12a', 12b' auf, die parallel zueinander angeordnet sind. Wie am besten im Querschnitt der Figur 9 erkennbar ist, besteht die Rollenleiste 12a' aus einem U-Profil, das nach oben hin offen ist. In der Figur 9 ist mit 42 eine Abdeckung angedeutet, welche die Rollenleiste 12a' nach oben hin verschließt. Abdeckungen 42 sind auch in dem Längsschnitt der Figur 7 erkennbar, in der Figur 6 jedoch nicht gezeigt, um den Blick auf die in der Rollenleiste 12a' aufgenommenen angetriebenen Transportrollen 14a' und die nicht angetriebenen Transportrollen 16a' vollständig freizugeben.

Die angetriebenen Transportrollen 14a' sind, genauso wie bei dem in der Figur 1 gezeigten Ausführungsbeispiel, zusammen mit einem eigenen elektrischen Nabenantrieb als kompakte Baugruppen ausgebildet. Diese Baugruppen haben, genauso wie auch die nicht angetriebenen Transportrollen 16a', seitliche Führungsstege, die in schlitzartige Aussparungen eingesetzt und dort fixiert sind. Die Aussparungen erstrecken sich dabei von den freien Enden der vertikalen Seitenschenkel des U-Profils vertikal nach unten.

Die beiden vertikalen Seitenschenkel der Rollenleiste 12a' weisen ferner zwei Durchbrüche auf, deren Abstand von den Stirnseiten der Rollenleiste 12a' identisch ist. Wie in den Figuren 8 und 9 erkennbar ist, wird jeder Durchbruch durch eine Aussparung 44 am äußeren Schenkel und eine Aussparung 46 am inneren Schenkel der Rollenleiste 12a' gebildet. Die Aussparung 46 am inneren Schenkel entsteht dadurch, daß der innere Schenkel entlang einer Linie aufgeschnitten wird, welche die Form eines nach oben offenen U-Profils hat. Die dadurch erzeugte Lasche 48 wird dann so weit nach innen in die Rollenleiste 12a' hineingebogen, bis sie waagerecht verläuft.

Die andere Rollenleiste 12b' ist in gleicher Weise ausgebildet, wobei auch hier die angetriebenen Transportrollen 14a', 14b' versetzt zueinander angeordnet sind, wie dies auch bei dem in der Figur 1 gezeigten Rollenbahnmodul 10 der Fall ist.

In die auf gleicher Höhe liegenden Durchbrüche in den Rollenleisten 12a', 12b' sind Quertraversen 18', 20' derart eingeführt, daß die freien Enden der Quertraversen 18', 20' über die äußeren Schenkel der Rollenleisten 12a', 12b' hinaus ragen, wie dies am besten in der Figur 1 erkennbar ist. Wie die Figur 8 zeigt, sind die Quertraversen 18', 20' bei dem dargestellten Ausführungsbeispiel als nach unten offene U-Profile ausgebildet. Der Querschnitt der U-Profile sollte so bemessen sein, daß die Quertraversen 18', 20' mit ausreichend großem Spiel durch die Aussparungen 44, 46 in den Rollenleisten 12a', 12b' hindurchgeführt werden können. Die Quertraversen 18', 20' sind lediglich an ihren nach oben weisenden Flächen 47 an den Rollenleisten 12a', 12b' befestigt. Hierzu werden die nach oben umgebogenen Laschen 48 mit diesen Flächen 47 der Quertraversen 18', 20' verschraubt oder auf andere Weise verbunden. In den Figuren 6, 8 und 9 sind Bohrungen für eine Verschraubung mit der Bezugsziffer 50 angedeutet.

An die nach außen ragenden Stirnseiten der Quertraversen 18', 20' können nun Halterungen für Laufrollen befestigt werden, um auf der Grundlage des Rollenbahnmoduls 10' Funktionseinheiten aufzubauen, wie sie vom Prinzip in den Figuren 2 bis 5 gezeigt sind. Die Quertraversen 18', 20' können zu diesem Zweck Gegenflansche (nicht dargestellt) aufweisen, wie sie in Figur 2 mit 30a, 30b bezeichnet sind. Halterungen für Laufrollen können aber selbstverständlich auch auf andere Weise an den Enden der Quertraversen 18', 20' befestigt werden.

Soll das Rollenbahnmodul 10' nicht Teil einer Funktionseinheit sein, wie sie in den Figuren 2 bis 5 gezeigt sind, sondern zum Aufbau einer geraden Förderstrecke dienen, so können die Quertraversen 18', 20' entweder vollständig weggelassen werden oder durch kürzere Quertraversen ersetzt werden, die seitlich nicht über die Rollenleisten 12a', 12b' hinausragen. Auf diese Weise wird verhindert, daß seitlich von den Rollenleisten 12a', 12b' abstehende Teile zu einer Gefährdung von Personen führen, die sich in der Nähe der Förderstrecke aufhalten.

## Patentansprüche

1. Rollenbahnförderer zum Transportieren von Warenträgern, insbesondere von Skids in der Automobilindustrie, mit
a) einer Förderstrecke, die aus mehreren hintereinander angeordneten Rollenbahnmodulen (10; 10') gebildet ist, wobei die Rollenbahnmodule (10; 10') jeweils zwei zueinander parallele Rollenleisten (12a, 12b; 12a', 12b') aufweisen, in denen mindestens eine angetriebene Transportrolle (14a, 14b; 14a', 14b') angeordnet ist, und mit
b) mehreren unterschiedlichen Funktionseinheiten (100; 200; 300; 400), die relativ zu der Förderstrecke bewegbar sind, wobei
die Funktionseinheiten jeweils (100; 200; 300; 400) auf der Basis des gleichen Rollenbahnmoduls (10; 10') und daran befestigten Fahrwerksmodulen (32a, 32b33a, 33b; 233a, 233b; 333a, 333b; 433a, 433b, 433a', 433b'), die Laufrollen (32a, 32b; 232a, 232b; 332a, 332b; 432a, 432b, 432a', 432b') aufweisen, aufgebaut sind, wobei sich unterschiedliche Funktionseinheiten voneinander durch die daran befestigten Fahrwerksmodule (33a, 33b; 233a, 233b; 333a, 333b; 433a, 433b, 433a', 433b') unterscheiden, und wobei
der Rollenbahnförderer wenigstens zwei der nachfolgenden Funktionseinheiten aufweist:
einen Querverschiebewagen, bei dem die Laufrollen (32a, 32b) der Fahrwerksmodule (33a, 33b) Drehachsen haben, die parallel zur Längsrichtung (LR) der Rollenleisten (12a, 12b) verlaufen;
einen Längsverschiebewagen (200), bei dem die Laufrollen (232a, 232b) der Fahrwerksmodule (233a, 233b) Drehachsen haben, die im rechten Winkel zu der Längsrichtung (LR) der Rollenleisten (12a, 12b) und parallel zu einer durch die Rollenleisten (12a, 12b) vorgegebenen Förderebene verlaufen;
einen Dreh- oder Schwenktisch (300; 400), bei dem die Laufrollen (332a, 332b; 432a', 432b') von wenigstens zwei Fahrwerksmodulen (333a, 333b; 433a, 433b, 433a', 433b') Drehachsen haben, die parallel zu einer durch die Rollenleisten (12a, 12b) vorgegebenen Förderebene und schräg zu der Längsrichtung (LR) der Rollenleisten (12a, 12b) verlaufen.

2. Rollenbahnförderer nach Anspruch 1, wobei der Rollenbahnforderer einen Dreh-oder Schwenktisch (300; 400) aufweist, und **gekennzeichnet durch** eine gekrümmte Laufschiene (40; 40a, 40b) für die Laufrollen, des Dreh- oder Schwentisches (300;400).

3. Rollenbahnförderer nach einem der vorhergehenden Ansprüche, **dadurch gekennzeichnet, daß** bei der Funktionseinheit (100; 200; 300; 400) die Fahrwerksmodule (33a, 33b; 233a, 233b; 333a, 333b; 433a, 433b, 433a', 433b') lösbar mit dem Rollenbahnmodul (10, 10') verbunden sind.

4. Rollenbahnförderer nach einem der vorhergehenden Ansprüche, **dadurch gekennzeichnet, daß** bei der Funktionseinheit (100; 200; 300; 400) auf jeder Längsseite des Rollenbahnmoduls (10; 10') zwei Fahrwerksmodule (33a, 33b; 233a, 233b; 333a, 333b; 433a, 433b, 433a', 433b') befestigt sind.

5. Rollenbahnförderer nach Anspruch 4, **dadurch gekennzeichnet, daß** bei der Funktionseinheit (100; 200; 300; 400) die Fahrwerksmodule (33a, 33b; 233a, 233b; 333a, 333b; 433a, 433b, 433a', 433b') derart an dem Rollenbahnmodul (10; 10') befestigt sind, daß sie von dessen Stirnseiten gleiche Abstände haben.

6. Rollenbahnförderer nach einem der vorhergehenden Ansprüche, **dadurch gekennzeichnet, daß** bei der Funktionseinheit (100; 200; 300; 400) die Fahrwerksmodule (33a, 33b; 233a, 233b; 333a, 333b; 433a, 433b, 433a', 433b') derart an dem Rollenbahnmodul (10; 10') befestigt sind, daß sie sich parallel zu einer durch die Rollenleisten (12a, 12b; 12a', 12b') festgelegten Ebene vom Rollenbahnmodul (10; 10') aus nach außen erstrecken.

7. Rollenbahnförderer nach einem der vorhergehenden Ansprüche, **dadurch gekennzeichnet, daß** bei der Funktionseinheit (100; 200; 300; 400) die Fahrwerksmodule (33a, 33b; 233a, 233b; 333a, 333b; 433a, 433b, 433a', 433b') von Seitenwangen der Rollenleisten (12a, 12b; 12a', 12b') abgehen.

8. Rollenbahnförderer nach einem der vorhergehenden Ansprüche, **dadurch gekennzeichnet, daß** an den Rollenbahnmodulen (10; 10') Anschläge (20, 22) zum Ausrichten der Fahrwerksmodule (33a, 33b; 233a, 233b; 333a, 333b; 433a, 433b, 433a', 433b') oder daran befestigter Zwischenträger ausgebildet sind.

9. Rollenbahnförderer nach einem der vorhergehenden Ansprüche, **dadurch gekennzeichnet, daß** die Rollenleisten (12a, 12b; 12a', 12b') in Querrichtung durch Quertraversen (18, 20; 18', 20') verbunden sind.

10. Rollenbahnförderer nach einem der vorhergehenden Ansprüche, **dadurch gekennzeichnet, daß** die Rollenleisten (12a, 12b; 12a', 12b') Durchbrüche (22, 24; 44, 46) haben, die quer zur Längsrichtung der Rollenleisten (12a, 12b; 12a', 12b') verlaufen.

11. Rollenbahnförderer nach Anspruch 10, **dadurch gekennzeichnet, daß** jedes Fahrwerksmodul (33a, 33b; 233a, 233b; 333a, 333b; 433a, 433b, 433a', 433b') mit einem Querträger (28a, 28b) verbunden ist, der in einen Durchbruch (22, 24; 44, 46) eingeführt ist.

12. Rollenbahnförderer nach den Ansprüchen 8 und 9, **dadurch gekennzeichnet, daß** die Quertraverse (18, 20) zwischen sich einander gegenüberliegenden Durchbrüchen (22, 24) der Rollenleisten (12a, 12b) angeordnet ist und als Anschlag für den Querträger (28a, 28b) dient.

13. Rollenbahnförderer nach Anspruch 11 oder 12, **dadurch gekennzeichnet, daß** die Quertraverse (18, 20) ein Hohl-, ein U- oder ein C-Profil ist, in das der Querträger (28a, 28b) eingeführt ist.

14. Rollenbahnförderer nach Anspruch 10, **dadurch gekennzeichnet, daß** bei der Funktionseinheit jeweils zwei Fahrwerksmodule an einem Querträger (18', 20') befestigt sind, der sich zumindest über die gesamt Breite des Rollenbahnmoduls (10') hinweg erstreckt und in den Durchbrüchen (44, 46) der Rollenleisten (12a', 12b') aufgenommen ist.

15. Rollenbahnförderer nach Anspruch 14, **dadurch gekennzeichnet, daß** die Querträger (18', 29') U-Profile sind.

16. Rollenbahnförderer nach Anspruch 14 oder 15, **dadurch gekennzeichnet, daß** die Rollenleisten (12a', 12b') U-Profile sind, die vorzugsweise nach oben offen sind.

17. Rollenbahnförderer nach einem der vorhergehenden Ansprüche, **dadurch gekennzeichnet, daß** jedes Rollenbahnmodul (10; 10') mindestens zwei angetriebene Transportrollen (14a, 14b; 14a', 14b') hat.

18. Rollenbahnförderer nach einem der vorhergehenden Ansprüche, **dadurch gekennzeichnet, daß** mindestens eine Laufrolle (32a, 32b; 232a, 232b; 332a, 332b; 432a, 432b, 432a', 432b') einen eigenen Antrieb hat.

19. Rollenbahnförderer nach einem der vorhergehenden Ansprüche, **dadurch gekennzeichnet, daß** jede angetriebene Transportrolle (14a, 14b) ihren eigenen Antrieb hat.

20. Rollenbahnförderer nach Anspruch 18 oder 19, **dadurch gekennzeichnet, daß** der Antrieb ein Nabenantrieb ist.

21. Rollenbahnförderer nach Anspruch 20, **dadurch gekennzeichnet, daß** für angetriebene Laufrollen (32a, 32b; 232a, 232b; 332a, 332b; 432a, 432b, 432a', 432b') und die angetriebenen Transportrollen (14a, 14b) identische Baugruppen verwendet sind, die jeweils eine Rolle und den Nabenantrieb umfassen.

22. Rollenbahnförderer nach einem der Ansprüche 18 bis 21, **dadurch gekennzeichnet, daß** die Rollenbahnmodule (10; 10') an ihren Stirnseiten einen elektrischen Anschluß für die Stromversorgung der Antriebe und einen Anschluß für eine Steuerung der Antriebe aufweist, die mit Anschlüssen eines daran angrenzenden Rollenbahnmoduls verbindbar sind.

23. Rollenbahnförderer nach Anspruch 22, **dadurch gekennzeichnet, daß** die Anschlüsse als lösbare Verbindungen ausgebildet sind.

24. Rollenbahnförderer nach einem der vorhergehenden Ansprüche, **gekennzeichnet durch** auf den Rollenleisten (12a', 12b') befestigte Abdeckungen (42), die den Raum zwischen den Rollenleisten (12a', 12b') überdecken und vorzugsweise alle die gleichen Abmessungen haben.

25. Rollenbahnförderer nach einem der vorhergehenden Ansprüche **dadurch gekennzeichnet, daß** der Abstand zwischen den Transportrollen (14a, 14b; 14a', 14b') doppelt so groß ist wie der Abstand zwischen den Stirnseiten der Rollenbahnmodule (10; 10') und den stirnseitig letzten Transportrollen.

26. Rollenbahnförderer nach Anspruch 1, **dadurch gekennzeichnet, daß** sich die Fahrwerksmodule (33a, 33b; 233a, 233b; 333a, 333b; 433a, 433b, 433a', 433b') ausschließlich durch die Anordnung der Laufrollen (32a, 32b; 232a, 232b; 332a, 332b; 432a, 432b, 432a', 432b') und ferner dadurch voneinander unterscheiden, ob die Laufrollen (32a, 32b; 232a, 232b; 332a, 332b; 432a, 432b, 432a', 432b') angetrieben sind oder nicht.

## Claims

1. Roller conveyor for transporting goods carriers, in particular skids in the automotive industry, comprising,
a) a conveyor path which is formed from a plurality of roller path modules (10; 10') arranged in series, the roller path modules (10; 10') respectively comprising two roller strips (12a, 12b; 12a', 12b') which are parallel to one another, in which at least one driven transport roller (14a, 14b; 14a', 14b') is arranged, and comprising
b) a plurality of different operation units (100; 200; 300; 400) which are movable relative to the conveyor path,
the operation units (100; 200; 300; 400) in each case being constructed on the basis of the same roller path module (10; 10') and running gear modules (32a, 32b, 33a, 33b; 233a, 233b; 333a, 333b; 433a, 433b, 433a', 433b') fastened thereto, which have rollers (32a, 32b; 232a, 232b; 332a, 332b; 432a, 432b, 432a', 432b'), different operation units differing from one another by the running gear modules (33a, 33b; 233a, 233b; 333a, 333b; 433a, 433b, 433a', 433b') fastened thereto, and
the roller conveyor comprising at least two of the following operation units:
a transverse sliding carriage in which the rollers (32a, 32b) of the running gear modules (33a, 33b) have rotational axes which extend parallel to the longitudinal direction (LR) of the roller strips (12a, 12b) ;
a longitudinal sliding carriage (200) in which the rollers (232a, 232b) of the running gear modules (233a, 233b) have rotational axes which extend at right angles to the longitudinal direction (LR) of the roller strips (12a, 12b) and parallel to a conveying plane predetermined by the roller strips (12a, 12b) ;
a turntable or swivel table (300; 400) in which the rollers (332a, 332b; 432a', 432b') of at least two running gear modules (333a, 333b; 433a, 433b, 433a', 433b') have rotational axes which extend parallel to a conveying plane predetermined by the roller strips (12a, 12b) and obliquely to the longitudinal direction (LR) of the roller strips (12a, 12b).

2. Roller conveyor according to Claim 1, the roller conveyor comprising a turntable or swivel table (300; 400), and **characterised by** a curved runner (40; 40a, 40b) for the rollers of the turntable or swivel table (300; 400).

3. Roller conveyor according to one of the preceding claims, **characterised in that** in the operation unit (100; 200; 300; 400) the running gear modules (33a, 33b; 233a, 233b; 333a, 333b; 433a, 433b, 433a', 433b') are releasably connected to the roller path module (10, 10').

4. Roller conveyor according to one of the preceding claims, **characterised in that** in the operation unit (100; 200; 300; 400) two running gear modules (33a, 33b; 233a, 233b; 333a, 333b; 433a, 433b, 433a', 433b') are fastened to each longitudinal side of the roller path module (10; 10').

5. Roller conveyor according to Claim 4, **characterised in that** in the operation unit (100; 200; 300; 400) the running gear modules (33a, 33b; 233a, 233b; 333a, 333b; 433a, 433b, 433a', 433b') are fastened to the roller path module (10; 10') such that they have the same spacing from the front faces thereof.

6. Roller conveyor according to one of the preceding claims, **characterised in that** in the operation unit (100; 200; 300; 400) the running gear modules (33a, 33b; 233a, 233b; 333a, 333b; 433a, 433b, 433a', 433b') are fastened to the roller path module (10; 10') such that they extend parallel to a plane fixed by the roller strips (12a, 12b; 12a', 12b'), outwardly away from the roller path module (10; 10').

7. Roller conveyor according to one of the preceding claims, **characterised in that** in the operation unit (100; 200; 300; 400) the running gear modules (33a, 33b; 233a, 233b; 333a, 333b; 433a, 433b, 433a', 433b') extend from side cheeks of the roller strips (12a, 12b; 12a', 12b').

8. Roller conveyor according to one of the preceding claims, **characterised in that** stops (20, 22) for aligning the running gear modules (33a, 33b; 233a, 233b; 333a, 333b; 433a, 433b, 433a', 433b') or intermediate members fastened thereto are configured on the roller path modules (10; 10').

9. Roller conveyor according to one of the preceding claims, **characterised in that** the roller strips (12a, 12b; 12a', 12b') are connected in the transverse direction by transverse members (18, 20; 18', 20').

10. Roller conveyor according to one of the preceding claims, **characterised in that** the roller strips (12a, 12b; 12a', 12b') have through-passages (22, 24; 44, 46) which extend transversely to the longitudinal direction of the roller strips (12a, 12b; 12a', 12b').

11. Roller conveyor according to Claim 10, **characterised in that** each running gear module (33a, 33b; 233a, 233b; 333a, 333b; 433a, 433b, 433a', 433b') is connected to a crossmember (28a, 28b) which is inserted into a through-passage (22, 24; 44, 46).

12. Roller conveyor according to Claims 8 and 9, **characterised in that** the transverse member (18, 20) is arranged between opposing through-passages (22, 24) of the roller strips (12a, 12b) and is used as a stop for the crossmember (28a, 28b).

13. Roller conveyor according to Claim 11 or 12, **characterised in that** the transverse member (18, 20) is a hollow profile, a U-shaped profile or a C-shaped profile, into which the crossmember (28a, 28b) is inserted.

14. Roller conveyor according to Claim 10, **characterised in that** in the operation unit, respectively two running gear modules are fastened to one crossmember (18', 20') which extends at least over the entire width of the roller path module (10') and is accommodated in the through-passages (44, 46) of the roller strips (12a', 12b').

15. Roller conveyor according to Claim 14, **characterised in that** the crossmembers (18', 29') are U-shaped profiles.

16. Roller conveyor according to Claim 14 or 15, **characterised in that** the roller strips (12a', 12b') are U-shaped profiles which are preferably open at the top.

17. Roller conveyor according to one of the preceding claims, **characterised in that** each roller path module (10; 10') has at least two driven transport rollers (14a, 14b; 14a', 14b').

18. Roller conveyor according to one of the preceding claims, **characterised in that** at least one roller (32a, 32b; 232a, 232b; 332a, 332b; 432a, 432b, 432a', 432b') has a separate drive.

19. Roller conveyor according to one of the preceding claims, **characterised in that** each driven transport roller (14a, 14b) has its own drive.

20. Roller conveyor according to Claim 18 or 19, **characterised in that** the drive is a hub drive.

21. Roller conveyor according to Claim 20, **characterised in that** for driven rollers (32a, 32b; 232a, 232b; 332a, 332b; 432a, 432b, 432a', 432b') and the driven transport rollers (14a, 14b) identical subassemblies are used which respectively comprise a roller and the hub drive.

22. Roller conveyor according to one of Claims 18 to 21, **characterised in that** the roller path modules (10; 10') on their front faces have an electrical connector for the power supply of the drives and a connector for controlling the drives, which may be connected to connectors of a roller path module adjacent thereto.

23. Roller conveyor according to Claim 22, **characterised in that** the connectors are configured as releasable connections.

24. Roller conveyor according to one of the preceding claims, **characterised by** covers (42) fastened to the roller strips (12a', 12b') which cover the space between the roller strips (12a', 12b') and preferably all have the same dimensions.

25. Roller conveyor according to one of the preceding claims, **characterised in that** the spacing between the transport rollers (14a, 14b; 14a', 14b') is double the size of the spacing between the front faces of the roller path modules (10; 10') and the last transport rollers on the front face.

26. Roller conveyor according to Claim 1, **characterised in that** the running gear modules (33a, 33b; 233a, 233b; 333a, 333b; 433a, 433b, 433a', 433b') differ from one another exclusively by the arrangement of rollers (32a, 32b; 232a, 232b; 332a, 332b; 432a, 432b, 432a', 432b') and moreover whether the rollers (32a, 32b; 232a, 232b; 332a, 332b; 432a, 432b, 432a', 432b') are driven or not driven.

## Revendications

1. Convoyeur à rouleaux dévolu au transport de supports d'articles, notamment de chevalets transrouleurs dans l'industrie de l'automobile, comprenant
a) une piste de convoyage constituée de plusieurs modules de convoyage (10 ; 10') à rouleaux, agencés en succession mutuelle, lesdits modules de convoyage (10 ; 10') à rouleaux étant respectivement munis de deux barres (12a, 12b ; 12a', 12b') à rouleaux, parallèles l'une à l'autre, dans lesquelles se trouve au moins un rouleau de transport (14a, 14b ; 14a', 14b') entraîné, et
b) plusieurs unités fonctionnelles différentes (100 ; 200 ; 300 ; 400), mobiles par rapport à ladite piste de convoyage, sachant que
lesdites unités fonctionnelles (100 ; 200 ; 300 ; 400) sont respectivement structurées sur la base du même module de convoyage (10 ; 10') à rouleaux, et de modules de roulement (33a, 33b ; 233a, 233b ; 333a, 333b ; 433a, 433b, 433a', 433b') qui sont fixés au module précité et comportent des galets de roulement (32a, 32b ; 232a, 232b ; 332a, 332b ; 432a, 432b, 432a', 432b'), des unités fonctionnelles différentes se distinguant les unes des autres par les modules de roulement (33a, 33b ; 233a, 233b ; 333a, 333b ; 433a, 433b, 433a', 433b') qui y sont fixés, et sachant que
ledit convoyeur à rouleaux comporte au moins deux, parmi les unités fonctionnelles suivantes :
un chariot à coulissement transversal, dans lequel les galets de roulement (32a, 32b) des modules de roulement (33a, 33b) présentent des axes de rotation s'étendant parallèlement à la direction longitudinale (LR) des barres (12a, 12b) à rouleaux ;
un chariot à coulissement longitudinal (200), dans lequel les galets de roulement (232a, 232b) des modules de roulement (233a, 233b) présentent des axes de rotation s'étendant à angle droit vis-à-vis de la direction longitudinale (LR) des barres (12a, 12b) à rouleaux, et parallèlement à un plan de convoyage préétabli par lesdites barres (12a, 12b) à rouleaux ;
un plateau tournant ou pivotant (300 ; 400), dans lequel les galets de roulement (332a, 332b ; 432a', 432b') d'au moins deux modules de roulement (333a, 333b ; 433a, 433b, 433a', 433b') présentent des axes de rotation s'étendant parallèlement à un plan de convoyage préétabli par les barres (12a, 12b) à rouleaux, et à l'oblique vis-à-vis de la direction longitudinale (LR) desdites barres (12a, 12b) à rouleaux.

2. Convoyeur à rouleaux selon la revendication 1, ledit convoyeur à rouleaux étant muni d'un plateau tournant ou pivotant (300 ; 400) et étant **caractérisé par** un rail curviligne de roulement (40 ; 40a, 40b) dédié aux galets de roulement dudit plateau tournant ou pivotant (300 ; 400).

3. Convoyeur à rouleaux selon l'une des revendications précédentes, **caractérisé par le fait que**, dans l'unité fonctionnelle (100 ; 200 ; 300 ; 400), les modules de roulement (33a, 33b ; 233a, 233b ; 333a, 333b ; 433a, 433b, 433a', 433b') sont reliés amoviblement au module de convoyage (10 ; 10') à rouleaux.

4. Convoyeur à rouleaux selon l'une des revendications précédentes, **caractérisé par le fait que**, dans l'unité fonctionnelle (100 ; 200 ; 300 ; 400), deux modules de roulement (33a, 33b ; 233a, 233b ; 333a, 333b ; 433a, 433b, 433a', 433b') sont fixés sur chaque face longitudinale du module de convoyage (10 ; 10') à rouleaux.

5. Convoyeur à rouleaux selon la revendication 4, **caractérisé par le fait que**, dans l'unité fonctionnelle (100 ; 200 ; 300 ; 400), les modules de roulement (33a, 33b ; 233a, 233b ; 333a, 333b ; 433a, 433b, 433a', 433b') sont fixés au module de convoyage (10 ; 10') à rouleaux de façon telle qu'ils présentent des distances égales par rapport aux faces extrêmes de ce dernier.

6. Convoyeur à rouleaux selon l'une des revendications précédentes, **caractérisé par le fait que**, dans l'unité fonctionnelle (100 ; 200 ; 300 ; 400), les modules de roulement (33a, 33b ; 233a, 233b ; 333a, 333b ; 433a, 433b, 433a', 433b') sont fixés au module de convoyage (10 ; 10') à rouleaux de façon telle qu'ils s'étendent vers l'extérieur, à partir dudit module de convoyage (10 ; 10') à rouleaux, parallèlement à un plan fermement établi par les barres (12a, 12b ; 12a', 12b') à rouleaux.

7. Convoyeur à rouleaux selon l'une des revendications précédentes, **caractérisé par le fait que**, dans l'unité fonctionnelle (100 ; 200 ; 300 ; 400), les modules de roulement (33a, 33b ; 233a, 233b ; 333a, 333b ; 433a, 433b, 433a', 433b') partent de pans latéraux des barres (12a, 12b ; 12a', 12b') à rouleaux.

8. Convoyeur à rouleaux selon l'une des revendications précédentes, **caractérisé par le fait que** des butées (20, 22) sont ménagées sur les modules de convoyage (10 ; 10') à rouleaux, en vue de l'orientation des modules de roulement (33a, 33b ; 233a, 233b ; 333a, 333b ; 433a, 433b, 433a', 433b'), ou de supports intermédiaires fixés à ces derniers.

9. Convoyeur à rouleaux selon l'une des revendications précédentes, **caractérisé par le fait que** les barres (12a, 12b ; 12a', 12b') à rouleaux sont reliées par des traverses (18, 20 ; 18', 20') dans le sens transversal.

10. Convoyeur à rouleaux selon l'une des revendications précédentes, **caractérisé par le fait que** les barres (12a, 12b ; 12a', 12b') à rouleaux comportent des évidements (22, 24 ; 44, 46) s'étendant transversalement par rapport à la direction longitudinale desdites barres (12a, 12b ; 12a', 12b') à rouleaux.

11. Convoyeur à rouleaux selon la revendication 10, **caractérisé par le fait que** chaque module de roulement (33a, 33b ; 233a, 233b ; 333a, 333b ; 433a, 433b, 433a', 433b') est relié à un support transversal (28a, 28b) inséré dans un évidement (22, 24 ; 44, 46).

12. Convoyeur à rouleaux selon les revendications 8 et 9, **caractérisé par le fait que** la traverse (18, 20) est interposée entre des évidements (22, 24) des barres (12a, 12b) à rouleaux qui sont situés en vis-à-vis, et sert de butée affectée au support transversal (28a, 28b).

13. Convoyeur à rouleaux selon la revendication 11 ou 12, **caractérisé par le fait que** la traverse (18, 20) est un profilé creux, un profilé en U ou un profilé en C, dans lequel le support transversal (28a, 28b) est inséré.

14. Convoyeur à rouleaux selon la revendication 10, **caractérisé par le fait que**, dans l'unité fonctionnelle, deux modules respectifs de roulement sont fixés à une traverse (18', 20') qui couvre au moins la largeur intégrale du module de convoyage (10') à rouleaux, et est logée dans les évidements (44, 46) des barres (12a', 12b') à rouleaux.

15. Convoyeur à rouleaux selon la revendication 14, **caractérisé par le fait que** les supports transversaux (28a, 28b) sont des profilés en U.

16. Convoyeur à rouleaux selon la revendication 14 ou 15, **caractérisé par le fait que** les barres (12a', 12b') à rouleaux sont des profilés en U, de préférence ouverts vers le haut.

17. Convoyeur à rouleaux selon l'une des revendications précédentes, **caractérisé par le fait que** chaque module de convoyage (10 ; 10') à rouleaux compte au moins deux rouleaux de transport (14a, 14b ; 14a', 14b') entraînés.

18. Convoyeur à rouleaux selon l'une des revendications précédentes, **caractérisé par le fait qu'**au moins un galet de roulement (32a, 32b ; 232a, 232b ; 332a, 332b ; 432a, 432b, 432a', 432b') présente un entraînement propre.

19. Convoyeur à rouleaux selon l'une des revendications précédentes, **caractérisé par le fait que** chaque rouleau de transport (14a, 14b) entraîné est équipé de son propre entraînement.

20. Convoyeur à rouleaux selon la revendication 18 ou 19, **caractérisé par le fait que** l'entraînement est un entraînement de moyeu.

21. Convoyeur à rouleaux selon la revendication 20, **caractérisé par** l'utilisation, pour des galets de roulement (32a, 32b ; 232a, 232b ; 332a, 332b ; 432a, 432b, 432a', 432b') entraînés et pour les rouleaux de transport (14a, 14b) entraînés, de groupes structurels identiques comprenant, respectivement, un rouleau et l'entraînement de moyeu.

22. Convoyeur à rouleaux selon l'une des revendications 18 à 21, **caractérisé par le fait que** les modules de convoyage (10 ; 10') à rouleaux comportent, à leurs faces extrêmes, une connexion électrique destinée à l'alimentation électrique des entraînements et une connexion dévolue à une commande desdits entraînements, pouvant être raccordées à des connexions d'un module de convoyage à rouleaux qui occupe une position limitrophe.

23. Convoyeur à rouleaux selon la revendication 22, **caractérisé par le fait que** les connexions sont réalisées sous la forme de jonctions dissociables.

24. Convoyeur à rouleaux selon l'une des revendications précédentes, **caractérisé par** des pièces de recouvrement (42) fixées sur les barres (12a', 12b') à rouleaux, comblant l'espace entre lesdites barres (12a', 12b') à rouleaux et présentant toutes, de préférence, les mêmes dimensions.

25. Convoyeur à rouleaux selon l'une des revendications précédentes, **caractérisé par le fait que** la distance séparant les rouleaux de transport (14a, 14b ; 14a', 14b') représente le double de la distance comprise entre les faces extrêmes des modules de convoyage (10 ; 10') à rouleaux, et les rouleaux de transport occupant la dernière position frontale.

26. Convoyeur à rouleaux selon la revendication 1, **caractérisé par le fait que** les modules de roulement (33a, 33b ; 233a, 233b ; 333a, 333b ; 433a, 433b, 433a', 433b') se différencient les uns des autres exclusivement par la disposition des galets de roulement (32a, 32b ; 232a, 232b ; 332a, 332b ; 432a, 432b, 432a', 432b') et, par ailleurs, selon que lesdits galets de roulement (32a, 32b ; 232a, 232b ; 332a, 332b ; 432a, 432b, 432a', 432b') sont entraînés, ou non.
